# EUROPÄISCHE PATENTSCHRIFT

(11) **EP 2 933 539 B1**
(45) Veröffentlichungstag und Bekanntmachung des Hinweises auf die Patenterteilung: **08.06.2016**
(21) Anmeldenummer: 15154933.4
(22) Anmeldetag: 12.02.2015
(51) Int. Cl.: F16K 31/02

(54) **Stellvorrichtung für Heizkreisventile**
Adjustment device for heating circuit valves
Dispositif de réglage de vannes de circuit de chauffage

(30) Priorität: 18.04.2014 EP 14165326
(43) Veröffentlichungstag der Anmeldung: 21.10.2015
(73) Patentinhaber: Claro Feinwerktechnik AG, 8902 Urdorf (CH)
(72) Erfinder: Klaus, Ortwin, 6300 Zug (CH)
(74) Vertreter: Rutz & Partner

(56) Entgegenhaltungen:
- EP-A1- 2 177 800

## Beschreibung

Die Erfindung betrifft eine Stellvorrichtung für Heizkreisventile und ein Heizkreisventil.

Eine gattungsgemässe Stellvorrichtung ist beispielsweise aus der EP2177800A1 bekannt und nachstehend in Fig. 1 gezeigt. Mittels dieser Stellvorrichtung kann ein von einer Ventilfeder gestützter Ventilkolben eines Heizkreisventils von einer ersten Lage, in der das Heizkreisventil geöffnet ist, gegen die Kraft der Ventilfeder in eine zweite Lage verschoben werden, in der das Heizkreisventil geschlossen ist. Bekannt sind zwei verschiedene Betriebsarten der Stellvorrichtung. Das Heizkreisventil kann in der Ruhelage der Stellvorrichtung, in der kein Betriebsstrom zugeführt wird, geschlossen (Betriebsart »ohne Strom zu«) oder geöffnet sein (Betriebsart »ohne Strom offen«).

Die mit einem Aussengehäuse versehene Stellvorrichtung gemäss der EP2177800A1 weist ein thermomechanisches Arbeitselement bzw. einen Aktuator mit einem ausfahrbaren Aktuatorkolben auf, welcher in der Betriebsart »ohne Strom offen« ein auf den Ventilkolben einwirkendes Stellteil antreiben und in der Betriebsart »ohne Strom zu« das Aktuatorgehäuse gegen eine Rückstellfeder stossen kann, welche über das Aktuatorgehäuse und das Stellteil mit einer Kraft auf den Ventilkolben einwirkt, die grösser ist als die Kraft der Ventilfeder, so dass das Heizkreisventil bei eingefahrenem Aktuatorkolben geschlossen ist.

In der Betriebsart »ohne Strom offen« ist somit das Aktuatorgehäuse stationär im Vorrichtungsgehäuse gehalten, während der Aktuatorkolben bei Stromzufuhr ausfahren und das Stellteil sowie den Ventilkolben zurück stossen und das Heizkreisventil schliessen kann.

In der Betriebsart »ohne Strom zu« ist hingegen der Aktuatorkolben stationär am Vorrichtungsgehäuse gehalten, während das Aktuatorgehäuse bei Stromzufuhr axial verschoben wird, weshalb die Rückstellfeder zurückgedrängt wird und das Stellteil sowie der Ventilkolben ausfahren können und das Heizkreisventil geöffnet wird.

Zum Ausfahren des Aktuatorkolbens ist im Aktuator ein Dehnmaterial vorgesehen, das sich bei Erwärmung ausdehnt und den Aktuatorkolben nach aussen schiebt. Zur Erwärmung des Dehnmaterials ist der Aktuator mit einem Heizelement, z.B. einem PTC-Widerstand, gekoppelt, welchem über elektrische Leitungen Energie zuführbar ist. Durch Unterbrechung der Stromzufuhr zum Heizelement und Abkühlung des Dehnmaterials kann der Aktuatorkolben durch die Ventilfeder (Betriebsart »ohne Strom offen«) bzw. durch die Rückstellfeder (Betriebsart »ohne Strom zu«) wieder in den Aktuator hinein verschoben werden.

Aus der DE19748973A1 ist eine Stellvorrichtung mit einem thermoelektrischen Aktuator bekannt, der von einer Rückstellfeder umgeben ist. Zur Vereinfachung der Montage wird die Rückstellfeder vor der Montage um eine Strecke zusammengedrückt, die kleiner als der maximale Hub des Arbeitskolbens. In dieser Position wird die Rückstellfeder lösbar fixiert. Die komprimierte Rückstellfeder wirkt bei der ersten Montage der Stellvorrichtung nicht auf den Ventilkolben ein, so dass die Stellvorrichtung montiert werden kann, ohne dass der Ventilkolben mit Kraftaufwand in das Heizkreisventil hinein verschoben werden muss.

Die Anordnung einer Rückstellfeder in der Stellvorrichtung mit einer Vorspannung ist relativ aufwändig. Zu beachten ist, dass die Rückstellfeder eine hohe Kraft aufweist und das Zusammendrücken und Fixieren der Rückstellfeder bei der Fertigung sowie das Lösen der Rückstellfeder bei der ersten Inbetriebnahme nicht leicht zu bewerkstelligen ist.

Der vorliegenden Erfindung liegt daher die Aufgabe zugrunde, eine verbesserte Stellvorrichtung für Heizkreisventile zu schaffen, die in einfacher Weise und mit geringem Kraftaufwand an einem Ventil befestigt werden kann. Ferner ist ein Heizkreisventil zu schaffen, das mit einer solchen Stellvorrichtung versehen ist.

Die Stellvorrichtung soll einfach und kostengünstig aufgebaut sein. Ferner soll die Stellvorrichtung herstellerseitig einfach und ohne Kraftaufwand zusammensetzbar sein und bei der Inbetriebnahme keine zusätzlichen Manipulationen erfordern.

Umstellungen der Betriebsart der Stellvorrichtung sollen zudem mit einfachen Massnahmen realisierbar sein.

Diese Aufgabe wird mit einer für Heizkreisventile vorgesehenen Stellvorrichtung gelöst, welche die in Anspruch 1 angegebenen Merkmale aufweist. Vorteilhafte Ausgestaltungen der Erfindung sind in weiteren Ansprüchen angegeben.

Die für Heizkreisventile vorgesehene Stellvorrichtung weist ein ein- oder mehrteiliges Vorrichtungsgehäuse auf, in dem eine Rückstellfeder, ein mit elektrischen Versorgungsleitungen verbundener Aktuator und ein Stellteil vorgesehen sind, mittels dessen die Stellvorrichtung auf das Heizkreisventil einwirken kann. Der Aktuator weist ein Aktuatorgehäuse und einen ausfahrbaren Aktuatorkolben auf und wirkt einerseits auf die Rückstellfeder und andererseits auf das Stellteil ein.

Erfindungsgemäss besteht das Stellteil aus wenigstens einem ersten und einem zweiten Stellelement, die in einem ungekoppelten Zustand relativ zueinander verschiebbar und bei Erreichen eines Koppelpunkts miteinander koppelbar und im gekoppelten Zustand zusammen verschiebbar sind.

Beim Normalbetrieb dieser Stellvorrichtung, die vorzugsweise für die Betriebsart »ohne Strom zu« ausgelegt ist, ist der von der Ventilfeder gestützte Ventilkolben über das Stellteil bzw. die beiden miteinander gekoppelten Stellelemente des Stellteils mit dem Aktuator gekoppelt, der von der Rückstellfeder gehalten ist. Die Rückstellfeder weist eine höhere Federkraft auf als die Ventilfeder, weshalb der Aktuator im stromlosen Zustand von der Rückstellfeder zusammen mit dem Ventilkolben nach unten gedrückt und das Heizkreisventil verschlossen wird. Dabei verbleibt eine Vorspannung an der Rückstellfeder, welche gewährleistet, dass das Heizkreisventil sicher verschlossen bleibt.

Erst bei der Betätigung des Aktuators wird das Aktuatorgehäuse durch den ausfahrenden Aktuatorkolben nach oben gegen die Rückstellfeder gedrückt, wonach das Stellteil und der Ventilkolben folgen und das Heizkreisventil geöffnet. Würde die Stellvorrichtung in diesem Zustand, d.h. mit eingefahrenem Aktuatorkolben und gekoppelten Stellelementen montiert, so müsste die Ventilfeder mit manueller Kraft komprimiert und der Ventilkolben zurückgedrängt werden, um das Heizkreisventil zu schliessen (Betriebsart: »ohne Strom zu«) und die Vorspannung der Rückstellfeder zu bewirken.

Bei der Auslieferung der erfindungsgemässen Stellvorrichtung kann hingegen vorteilhaft vorgesehen werden, dass die beiden Stellelemente ungekoppelt und gegeneinander verschoben sind. Die Stellvorrichtung kann daher mit dem Heizkreisventil verbunden werden, ohne dass die Rückstellfeder über den Aktuator und das Stellteil auf den Ventilkolben einwirkt und die Kraft der Ventilfeder überwunden werden muss. Nach der Montage und vor der Inbetriebnahme der Stellvorrichtung liegt somit der Zustand »ohne Strom offen« vor. Beide Federn, die Rückstellfeder und die Ventilfeder, befinden sich im entspannten Zustand. Die Montage der Stellvorrichtung gelingt somit ohne Kraftaufwand und ohne die Rückstellfeder zuerst zu komprimieren.

Das Stellteil ist bei der Auslieferung der Stellvorrichtung somit nicht im Betriebszustand sondern in einem Bereitschaftszustand. In diesem Bereitschaftszustand können die beiden Stellelemente gegeneinander verschoben werden bis sie miteinander gekoppelt sind und vorzugsweise ineinander einrasten.

Besonders vorteilhaft ist, dass dieser Betriebszustand bzw. Bereitschaftszustand sowohl werkseitig, als auch anwenderseitig mit geringem Aufwand vollzogen werden kann, in dem die beiden Stellelemente voneinander entkoppelt und gegeneinander verschoben werden.

Die gegenseitige Verschiebung der Stellelemente, die für die gegenseitige Kopplung erforderlich ist, erfolgt vorteilhaft durch Betätigung des Aktuators. Beispielsweise wird der Aktuatorkolben gegen ein Gehäuseteil ausgefahren, wodurch das Aktuatorgehäuse angehoben und die Rückstellfeder komprimiert wird. Gleichzeitig wird das vom Aktuator gehaltene erste Stellelement relativ zum zweiten Stellelement verschoben bis ein Kopplungspunkt erreicht oder überschritten wird.

Nach Erreichen des Kopplungspunktes werden die beiden Stellelemente selbsttätig miteinander gekoppelt. Zu diesem Zweck sind die beiden Stellelemente mit Kopplungselementen oder Blockadeelementen versehen, welche ineinander eingreifen und verhindern können, dass das erste Stellelement wieder zurück am zweiten Stellelement vorbeigeschoben werden kann. Die beiden Stellelemente bilden nach der Kopplung somit das betriebsbereite Stellteil.

Im gekoppelten Zustand bilden die Kopplungselemente eine Blockadeverbindung oder vorzugsweise eine Rastverbindung. Bei der Blockadeverbindung resultiert lediglich eine gegenseitige Blockade der beiden Stellelemente, die nicht mehr ineinander verschoben werden können. Bei der Rastverbindung erfolgt eine Verrastung oder Verriegelung der beiden Stellelemente, die in der Folge weder gegeneinander noch auseinander geschoben werden können und faktisch eine Einheit bilden.

Die Blockade, Verrastung oder Verriegelung kann auf verschiedene Weise erreicht werden. Vorzugsweise bildet eines der Kopplungselemente eine Ausnehmung und das dazu korrespondierende Kopplungselementeinen Hebel oder einen Nocken, der in die Ausnehmung eintreten kann. Vorzugsweise ist wenigstens eines der Kopplungselemente elastisch ausgebildet, so dass es für den Bereitschaftszustand vorgespannt werden kann und bei Erreichen der Kopplungsposition selbsttätig in eine Wirkverbindung mit dem anderen Kopplungselement eintreten kann.

Im entkoppelten Zustand sind die Kopplungselemente vorzugsweise gespannt, so dass sie nach Überschreiten des Kopplungspunktes einrasten können. In einer vorzugsweisen Ausgestaltung wird hingegen vorgesehen, dass die Kopplungselemente ist zweiten Stellteil im Bereitschaftszustand der Stellvorrichtung entspannt in einem Parkraum liegen. Der Parkraum weist vorzugsweise eine geneigte Rampe auf, entlang der die Kopplungselemente beim gegenseitigen Verschieben der Stellelemente hochgefahren und gespannt werden können. Im Bereitschaftszustand befindet sich das zweite Stellteil daher entspannt in einem Parkraum und ist keinen äusseren Kräften ausgesetzt, weshalb auch längerfristig keine Deformationen resultieren können.

Die erfindungsgemässe Lösung erlaubt es denn auch, das zweite Stellelement in einfacher Weise vom ersten Stellelement wieder zu entkoppelt und beispielsweise in die Parkposition zu verschieben. Die Stellvorrichtung kann daher mit einfachen Massnahmen wieder in den Lieferzustand »ohne Strom offen« zurückversetzt werden. Der Installateur kann die Heizleitungen »stromlos öffnen« und die Zirkulation des Heizmediums vorsehen, ohne dass die Anlage unter Strom ist.

Zur Durchführung dieser Massnahme kann der Installateur in einfacher Weise mit einem Werkzeug auf das Stellteil bzw. das zweite Stellelement zugreifen und dieses entkoppelt. Alternativ kann das zweite Stellelement auch drehbar gelagert sein, so dass es durch eine Drehung entkoppelt werden kann.

Die Länge des Stellteils im Betriebszustand entspricht vorzugsweise annähernd der Summe der Längen der wenigstens zwei Stellelemente. Beispielsweise sind die beiden Stellelemente bei der Auslieferung der Stellvorrichtung teleskopisch ineinander eingefahren, weshalb durch gegenseitige Verschiebung der Stellelemente eine entsprechende Verlängerung resultiert. Die beiden Stellelemente sind vorzugsweise rohrförmig oder ringförmig ausgestaltet und derart dimensioniert, dass sie im ungekoppelten Zustand axial ineinander verschiebbar sind. Die rohrförmige oder ringförmige Ausgestaltung der Stellelemente verleiht dem Stellteil im Betriebszustand eine hohe Stabilität, so dass grössere Kräfte übertragen werden können.

Damit die beiden Stellelemente miteinander koppelbar sind, weist das erste Stellelement wenigstens ein erstes Kopplungselement und das zweite Stellelement wenigstens ein zweites Kopplungselement auf. Nach einer gegenseitigen Verschiebung der beiden Stellelemente dies zu einem Kopplungspunkt oder über einen Kopplungspunkt hinaus greifen die ersten und zweiten Kopplungselemente derart ineinander ein; dass die beiden Stellelemente nicht mehr ineinander verschoben werden können. Es resultiert somit eine starre, vorzugsweise formschlüssige Verbindung zwischen den beiden Stellelementen.

Damit die gegenseitige Verschiebung der beiden Stellelemente erfolgen kann, ist vorzugsweise eines der Stellelemente formschlüssig oder kraftschlüssig mit einem beweglichen Teil des Aktuators verbunden. Die Verbindung kann zum Beispiel durch einen Presssitz, eine Verrastung, eine Verschraubung oder durch Verwendung eines Klebstoffs bewirkt werden. Das andere Stellelement wird vorzugsweise an einem Anschlag gehalten, so dass bei der Betätigung des Aktuators die relative Verschiebung der beiden Stellelemente erfolgen kann.

Vorzugsweise weist das erste Stellelement wenigstens einen Stössel auf, der in das zweite Stellelement einführbar ist und der eine Ausnehmung aufweist, die das erste Kopplungselement bildet. Das zweite Stellelement weist vorzugsweise wenigstens ein elastisches Hebelelement auf, welches das zweite Kopplungselement bildet. Der elastische Hebel liegt im ungekoppelten Zustand der Stellelemente vorgespannt bzw. elastisch gebogen am Stössel an und kann nach Erreichen des Kopplungspunktes in das zweite Kopplungselement eingreifen. Diese Kopplung wird in der Folge für den weiteren Betrieb der Stellvorrichtung aufrechterhalten.

In bevorzugten Ausgestaltungen weist die Stellvorrichtung ein rohrförmiges Gehäuseteil auf, das ein abgedecktes Oberteil und ein mit einem Heizkreisventil verbindbares Unterteil sowie eine Trennwand zwischen dem Oberteil und dem Unterteil umfasst. Die Trennwand weist wenigstens eine Durchtrittsöffnung auf, durch die hindurch das Stellteil, vorzugsweise der wenigstens eine Stössel des ersten Stellelements, hindurch verschiebbar ist, während das zweite Stellelement unterhalb der Trennwand gehalten ist.

Anstelle einer Trennwand könnten auch Halteelemente oder Flanschelemente vorgesehen sein, die das zweite Stellelement halten. Die Trennwand weist hingegen wesentliche Vorteile auf und dient primär der Abtrennung der elektrischen Vorrichtung der Stellvorrichtung vom Heizkreisventil. Das Oberteil kann vorteilhaft abgedichtet werden, so dass kein Wasser in dieses eintreten und die elektrische Vorrichtung beschädigen kann. Weiterhin kann die Trennwand der Lagerung des Aktuator dienen, so dass dieser axial verschiebbar ist, während der Aktuatorkolben beispielsweise gegen die Trennwand geführt wird. Dazu ist die Trennwand vorzugsweise mit einem zylinderförmigen Aufnahmeteil versehen, welches der verschiebbaren Lagerung des Aktuators dient. Der Zylinderboden kann vorteilhaft mit der wenigstens einen Durchtrittsöffnung versehen werden und als Stützfläche für den Aktuatorkolben dienen, so dass bei der Betätigung des Aktuators das Aktuatorgehäuse gegen die Rückstellfeder verschiebbar ist bzw. angehoben wird.

Das zweiteilige oder mehrteilige Stellteil kann direkt oder über ein Zwischenstück indirekt auf den Kolben des Heizkreisventils einwirken. Vorzugsweise erfolgt die Einwirkung über ein Zwischenstück, welches vorzugsweise hutförmig ausgestaltet ist und das zylinderförmige Aufnahmeteil abschirmt. Die beiden Stellelemente können zudem beliebig geformt sein und dadurch zusätzliche Funktionen wahrnehmen. Beispielsweise wird das zweite Stellelement mit dem Hutelement und/oder mit Anzeigeelementen versehen, die den Zustand des Heizkreisventils anzeigen.

Nachfolgend wird die Erfindung anhand von Zeichnungen beispielsweise näher erläutert. Dabei zeigt:
- Fig. 1: einen Schnitt durch die aus der EP2177800A1 bekannte Stellvorrichtung 1', die ein einteiliges Stellteil 7' aufweist;
- Fig. 2a: in einer vorzugsweisen Ausgestaltung ein für die erfindungsgemässe Stellvorrichtung 1 von Fig. 3a und Fig. 4a vorgesehenes zweiteiliges Stellteil 7, das ein erstes und ein zweites Stellelement 71, 72 aufweist, die miteinander koppelbar sind;
- Fig. 2b: die beiden voneinander getrennten Stellelemente 71, 72 von Fig. 2a von unten gesehen;
- Fig. 3a: einen Längsschnitt durch eine erfindungsgemässe Stellvorrichtung 1, die mit einem zweiteiligen Stellteil 7 gemäss Fig. 2a ausgerüstet ist in einem Zustand vor der erstmaligen Betriebsaufnahme;
- Fig. 3b: das zweiteilige Stellteil 7 von Fig. 2a in der in Fig. 3a gezeigten Konfiguration mit den beiden ineinander verschobenen Stellelementen 71, 72 von der Seite;
- Fig. 3c: das zweiteilige Stellteil 7 von Fig. 3b mit den beiden ineinander verschobenen Stellelementen 71, 72 von unten;
- Fig. 3d: das zweiteilige Stellteil 7 in der in Fig. 3a gezeigten Konfiguration mit dem Aktuator 4 und dem hutförmigen Zwischenstück 6;
- Fig. 3e: die Vorrichtungsteile von Fig. 3d in einer Schnittdarstellung entlang der in Fig. 3d gezeigten Schnittlinie A--A;
- Fig. 4a: einen Längsschnitt durch die Stellvorrichtung 1 von Fig. 3a in einem Zustand nach der erstmaligen Betriebsaufnahme;
- Fig. 4b: das zweiteilige Stellteil 7 von Fig. 2a in der in Fig. 4a gezeigten Konfiguration mit den beiden miteinander gekoppelten Stellelementen 71, 72 von der Seite;
- Fig. 4c: das zweiteilige Stellteil 7 von Fig. 4b mit den beiden miteinander gekoppelten Stellelementen 71, 72 von unten;
- Fig. 4d: das zweiteilige Stellteil 7 von Fig. 2a in der in Fig. 4a gezeigten Konfiguration, das den Aktuator 4 trägt und das in das hutförmige Zwischenstück 6 eingesetzt ist;
- Fig. 4e: die Vorrichtungsteile von Fig. 4d in einer Schnittdarstellung entlang der in Fig. 4d gezeigten Schnittlinie B-B;

- Fig. 5a: einen Längsschnitt durch eine weitere erfindungsgemässe Stellvorrichtung 1, die mit einem zweiteiligen Stellteil 7 ausgerüstet ist, in einem Zustand vor der erstmaligen Betriebsaufnahme mit eingefahrenem Aktuatorkolben 42 und verschiebbar miteinander verbundenen Stellelementen 71, 72;
- Fig. 5b: die Stellvorrichtung 1 von Fig. 5a nach der erstmaligen Betriebsaufnahme mit ausgefahrenem Aktuatorkolben 42, angehobenem Aktuatorgehäuse 41 und miteinander gekoppelten Stellelementen 71, 72 dies Stellteils 7;
- Fig. 5c: die Stellvorrichtung 1 von Fig. 5b mit eingefahrenem Aktuatorkolben 42 und abgesenktem Aktuatorgehäuse 41 und dem zweiteiligen Stellteil 7, das auf das Zwischenstück 6 einwirkt;
- Fig. 6a: das zweiteilige Stellteil 7 der Stellvorrichtung 1 von Fig. 5a mit dem mit dem Gehäuse 41 des Aktuators gekoppelten ersten Stellelement 71, entlang dem ein ringförmige zweites Stellelement 72 verschiebbar ist sowie das hutförmige Zwischenstück 6; und
- Fig. 6b: die beiden voneinander getrennten Stellelemente 71, 72 von Fig. 6a und das hutförmige Zwischenstück 6 in einer Schnittdarstellung.

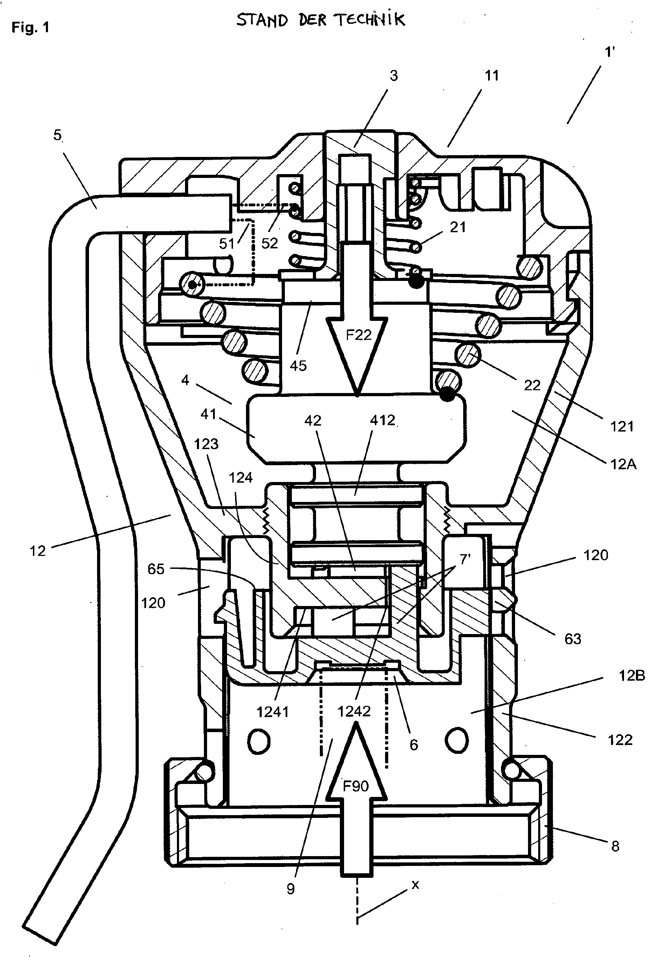

Fig. 1 zeigt einen Schnitt durch die aus der EP2177800A1 bekannte Stellvorrichtung 1', die ein einteiliges Stellteil 7' aufweist und die für die Betriebsart "ohne Strom zu« konfiguriert ist. Die Stellvorrichtung 1' umfasst ein thermomechanisches Arbeitselement bzw. einen Aktuator 4 der ein Aktuatorgehäuse 41 und einen daraus ausfahrbaren Aktuatorkolben 42 aufweist, mittels dessen ein Heizkreisventil betätigt werden kann.

Diese Stellvorrichtung 1' umfasst ein rotationsymmetrisches Vorrichtungsgehäuse mit einem lösbaren ersten Gehäuseteil 11, das als Abdeckung auf ein zweites Gehäuseteil 12 aufsetzbar ist, welches mittels einer Überwurfmutter 8 mit einem Heizkreisventil verbindbar ist, das einen schematisch gezeigten Ventilkolben 9 aufweist. Das rohrförmige zweite Gehäuseteil 12 besteht aus einem teilweise konisch verlaufenden oberen Rohrteil 121 und einem zylindrischen unteren Rohrteil 122, die durch eine Trennwand 123 voneinander getrennt sind, so dass im oberen Rohrteil 121 eine obere Kammer 12A und im unteren Rohrteil 122 eine untere Kammer 12B resultiert. Die Trennwand 123 weist ein nach oben geöffnetes, zylinderförmiges Aufnahmeteil 124 auf, in das ein Teil 412 des Aktuatorgehäuses 41 derart eingesetzt ist, dass es innerhalb des Aufnahmeteils 124 entlang der Achse x verschiebbar gelagert ist. Der Aktuator 4 ist derart in das Aufnahmeteil 124 eingesetzt, dass der Aktuatorkolben 42 gegen den Zylinderboden 1241 des Aufnahmeteils 124 ausgefahren werden kann und beim Ausfahren die axiale Verschiebung des Aktuatorgehäuses 41 bewirkt.

Im Zylinderboden 1241 sind Durchtrittsöffnungen 1242 vorgesehen, durch die Elemente des Stellteils 7' hindurch und gegen das Aktuatorgehäuse 41 geführt sind. Das Stellteil 7' ist in der unteren Kammer 12B des zweiten Gehäuseteils 12 angeordnet und liegt nach der Montage der Stellvorrichtung 1' einerseits am Ventilkolben 9 des angeschlossenen Heizkreisventils und andererseits am Aktuatorgehäuse 41 an, das innerhalb der oberen Kammer 12A an einer Rückstellfeder 22 und an einer Kontaktfeder 21 anliegt. Über diese beiden Federn 21, 22 wird der Aktuator mit Strom versorgt.

Mittels der Rückstellfeder 22, unterstützt von der Kontaktfedern 21, werden das Aktuatorgehäuse 41 sowie das Stellteil 7' und der daran anliegende Ventilkolben 9, gegen die Kraft einer Ventilfeder (nicht gezeigt) nach unten gegen das Heizkreisventil gedrückt. Da die Federkräfte F22 der Rückstellfeder 22 und der Kontaktfeder 21 grösser sind, als die Kraft F90 der im Heizkreisventil vorgesehenen Ventilfeder, wird der Ventilkolben 9 stationär in der unteren Endlage gehalten, in der das Heizkreisventil verschlossen ist, weshalb bei inaktivem Aktuator 4 der Zustand "ohne Strom zu« resultiert.

Beim Ausfahren des Aktuatorkolbens 42 wird das Aktuatorgehäuse 41 nach oben verschoben, wonach das Stellteil 7', gestossen vom Ventilkolben 9, weiter in das Aufnahmeteil 124 eindringen kann. Nach dem Einfahren des Aktuatorkolbens 42 werden das Aktuatorgehäuse 41, das Stellteil 7' und der Ventilkolben 9 von der Rückstellfeder 22 und der Kontaktfeder 21 wieder nach unten verschoben.

Die einzige Verbindung zwischen der ersten und der zweiten Kammer 12A, 12B des zweiten Gehäuseteils 12 bilden somit die Durchtrittsöffnungen 1242 in der Trennwand 123 bzw. im Aufnahmeteil 124. Hinsichtlich des Eindringens von Wasser in die Stellvorrichtung 1, d.h. in die erste Kammer 12A sind daher nur diese Durchtrittsöffnungen 1242 relevant.

In der gezeigten Position, in der die Stellvorrichtung 1 über einem Heizkreisventil montiert ist, besteht grundsätzlich keine Gefahr, dass Wasser durch die Durchtrittsöffnungen 1242 in die erste Kammer 12A eindringen und die dort vorgesehenen Vorrichtungsteile 21, 22, 4 schädigen kann. Sofern die Stellvorrichtung 1 hingegen unterhalb eines Heizkreisventils montiert wird, besteht die Gefahr, dass in die zweite Kammer 12B eindringendes Wasser durch die Durchtrittsöffnungen 1242 in die erste Kammer 12A gelangen könnte.

Um dies zu verhindern weist das Stellteil 7' ein Hutelement 6 auf, dessen Abmessungen derart gewählt sind, dass das Aufnahmeteil 124 vom Hutrand 65 überdeckt und teilweise umschlossen und dadurch nach aussen abgeschirmt wird.

Bei vertikaler Ausrichtung und Montage der Stellvorrichtung 1 unterhalb des Heizkreisventils (so genannte hängende Montage) trifft in die zweite Kammer 12B eindringendes Wasser daher auf das Hutelement 6, welches das mit den Durchlassöffnungen 1242 versehene Aufnahmeteil 124 zuverlässig abschirmt. Das eindringende Wasser fliesst somit über das Hutelement 6 hinweg und wird an der untersten Stelle der zweiten Kammer 12B gesammelt und über Öffnungen 120 im zweiten Rohrteil 122 aus der zweiten Kammer 12B nach aussen abgeführt. Ein Eindringen von Wasser in die erste Kammer 12A wird somit ohne die Verwendung eines verschleissanfälligen Dichtungsrings verhindert.

Das Hutelement 6 weist jedoch nicht nur eine Abschirmungsfunktion, sondern auch eine Anzeigefunktion auf. Dazu ist ein Nocken 63 innerhalb der Öffnung 120 gehalten, welcher die Lage des Hutelements 6 und somit auch die Lage des Stellteils 7' anzeigt, die eine Einheit bilden. Das Stellteil 7', das für die Steuerung des Heizkreisventils von Bedeutung ist, wurde daher anhand des Hutelements 6 funktional erweitert.

Zu beachten ist ferner der auf dem Aktuator 4 ruhende Signalzapfen 3, der bei der Betätigung des Aktuators 4 proportional zur Auslenkung des Aktuatorkolbens 42 angehoben wird und daher ebenfalls den Zustand des Heizkreisventils anzeigt.

Fig. 1 zeigt ferner ein Anschlusskabel 5 mit einer ersten und einer zweiten Anschlussleitung 51, 52, welche der Stromzufuhr zum Aktuator 4 dienen. Die erste Anschlussleitung 51 ist mit der Kontaktfeder 21 verbunden, welche an einem ersten Anschlusskontakt des Aktuators 4 anliegt. Die zweite Anschlussleitung 52 ist mit der Rückstellfeder 22 verbunden, die an einem zweiten Anschlusskontakt des Aktuators 4 anliegt.

Die Stellvorrichtung 1` von Fig. 1 ist einfach aufgebaut und weist zahlreiche vorteilhafte Funktionen auf. Hingegen lässt sich diese Stellvorrichtung 1' nur mit Kraftaufwand auf einem Heizkreisventil montieren. Aufgrund der Betriebsart »ohne Strom zu« ist das Stellteil 7' im stromlosen Zustand des Aktuators 4 vollständig nach unten gefahren, weshalb das Stellteil 7' bei der Montage der Stellvorrichtung 1' am Ventilkolben 9 des Heizkreisventils anliegt und dieser mit Kraftaufwand nach unten verdrängt werden muss.

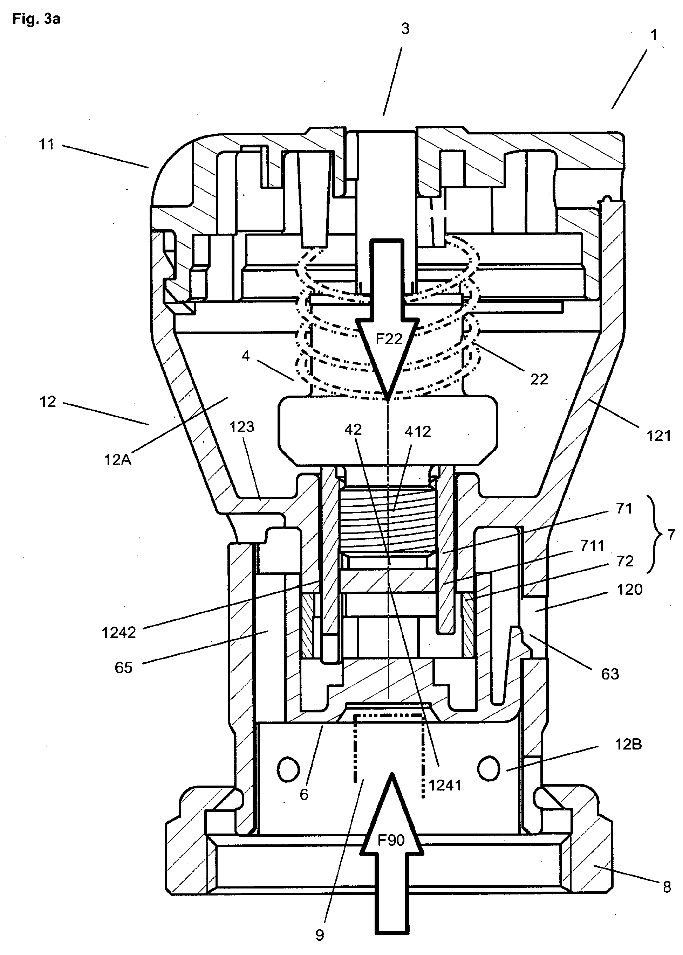

Die Stellvorrichtung 1' von Fig. 1 wird anhand der erfindungsgemässen Lösung vorteilhaft weitergebildet und mit einem Stellteil 7 versehen, das aus wenigstens zwei miteinander koppelbaren Stellelementen besteht. Erfindungsgemässe Stellvorrichtungen 1, wie die in Fig. 3a gezeigte Stellvorrichtung 1, können daher alle Merkmale der Stellvorrichtung 1' von Fig. 1 aufweisen, wobei jedoch das einteilige Stellteil 7' durch ein mehrteiliges Stellteil ersetzt wird, dass wenigstens zwei gegeneinander verschiebbaren und miteinander koppelbare Stellelemente aufweist. In gleicher Weise können weitere bekannte Stellvorrichtungen erfindungsgemäss derart weitergebildet werden, dass sie im Lieferzustand die Betriebsart »ohne Strom offen« aufweisen und leicht montiert werden können.

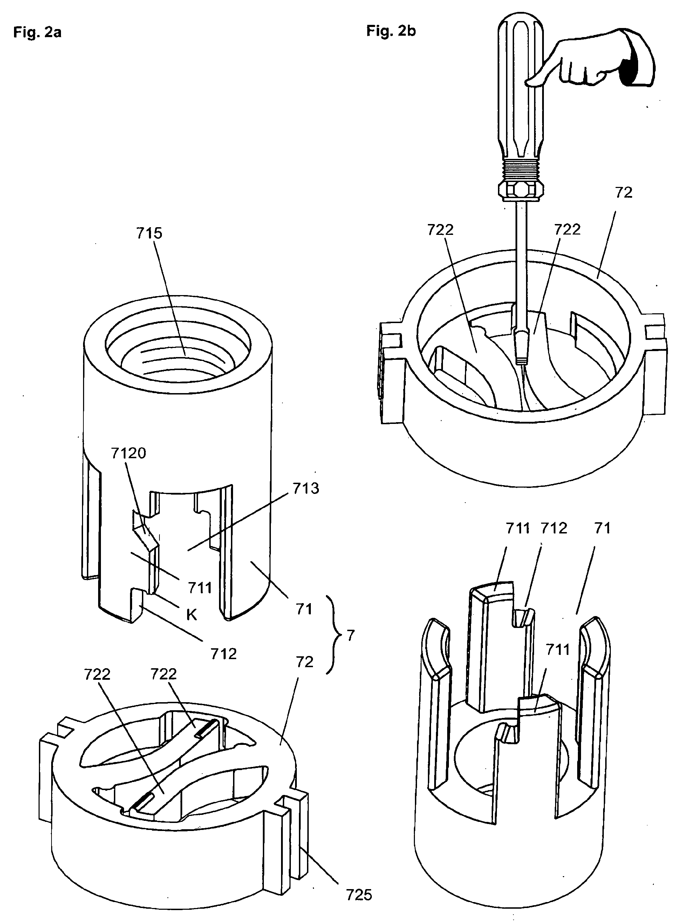

Ein vorzugsweise ausgestaltetes zweiteiliges Stellteil 7 mit zwei voneinander getrennten Stellelementen 71, 72 ist in den Figuren 2a und 2b von der Seite und von unten gezeigt.

Fig. 3a zeigt einen Schnitt durch eine erfindungsgemässe Stellvorrichtung 1, die mit einem zweiteiligen Stellteil 1 gemäss Fig. 2a ausgerüstet ist, in einem Zustand vor der erstmaligen Betriebsaufnahme. Die erfindungsgemässe Stellvorrichtung 1 umfasst im Wesentlichen den Aufbau der Stellvorrichtung 1' von Fig. 1, zusätzlich jedoch das zweiteilige Stellteil 7 von Fig. 2a. Die erfindungsgemässe Lösung kann daher mit geringem Aufwand in herkömmliche Stellvorrichtungen integriert werden.

Das in die Stellvorrichtung 1 integrierte zweiteilige Stellteil 7, das in Fig. 2a in einer vorzugsweisen Ausgestaltung gezeigt ist, weist ein erstes hülsenförmiges Stellelement 71 auf, das vier Stössel 711 umfasst, die durch rechteckige Ausnehmungen 713 in der Hülse voneinander getrennt sind. Die Stössel 711 bilden daher Wandsegmente des hülsenförmige ersten Stellelements 71. Endseitig sind die Stössel 711 je mit einer Ausnehmung 712 versehen, die je ein erstes Kopplungselement 712 bilden. Ferner weist das erste Stellelement 71 ein Innengewinde 715 auf, in das ein Gewindeteil 412 des Aktuators 4 eindrehbar ist (siehe Fig. 3a), um das erste Stellelement 71 mit dem Aktuator 4 zu verbinden.

Ferner weist das erste Stellelement in dieser vorzugsweisen Ausgestaltung oberhalb des Kopplungselements 712 eine Parklücke 7120 auf, die eine nach unten geneigte Rampe aufweist.

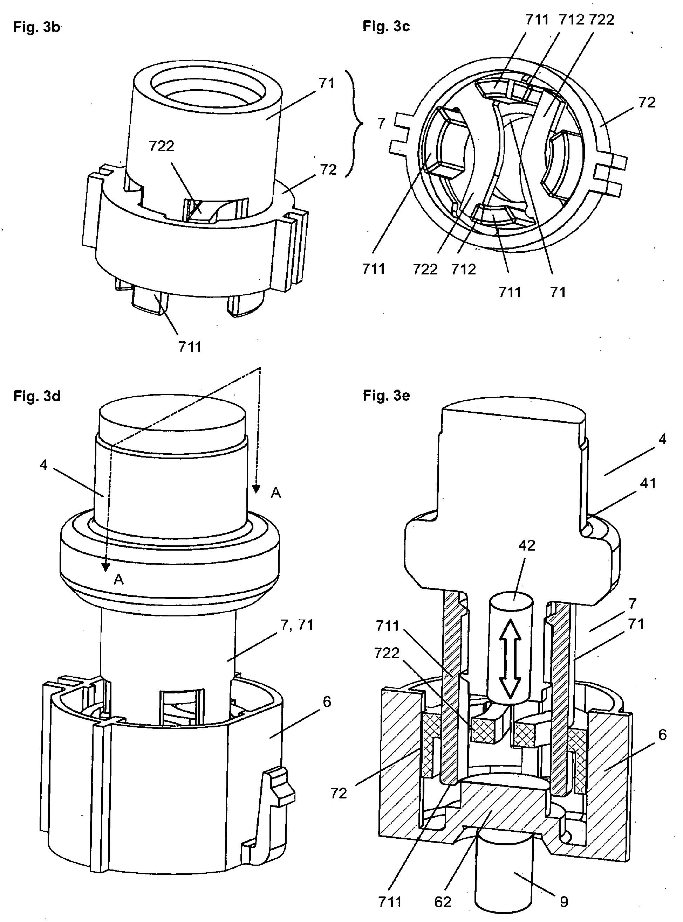

Das zweite Stellelement 72 ist ringförmig ausgestaltet und weist zwei nach innen ragende elastische Hebelarme 722 auf, die je ein zweites Kopplungselement 722 bilden. Das erste und das zweite Stellelement 71, 72 sind derart dimensioniert, dass die Stössel 711 des ersten Stellelements 71 in den Ringkörper des zweiten Stellelements 72 eingefahren werden können, wobei die elastischen Hebelarme 722 zurückgebogen werden (siehe Fig. 3b). Beim Auseinanderschieben der beiden Stellelemente 71, 72 fahren die Hebelarme 722 daher entlang den Stösseln 711 bis ein Kopplungspunkt K überschritten wird (siehe Fig. 2a) und die Hebelarme 722 in die Ausnehmungen 712 in den Stösseln 711 eintreten können. In der Folge blockieren die in den Ausnehmungen 712 gefangenen Hebelarme 722 bzw. die ineinander eingreifenden Kopplungselemente 712, 722 ein erneutes Gegeneinanderschieben der beiden Stellelemente 71, 72.

In der Ausgestaltung mit der Parklücke 7120 befinden sich die Hebelarme 722 bei der Auslieferung der Stellvorrichtung entspannt in den Parklücken 7120. Bei der Inbetriebnahme der Stellvorrichtung bzw. beim Hochziehen des ersten Stellelement 71 fahren die Hebelarme 722 daher entlang den geneigten Rampen der Parklücken 7120 nach aussen und werden gespannt, so dass sie nach einer weiteren Verschiebung des ersten Stellelements 71 kraftvoll in die Ausnehmungen 712 eintreten können.

In vorzugsweisen Ausgestaltungen wird zudem vorgesehen, dass die Kopplungselemente 712, 722 formschlüssig ineinander eingreifen und eine gegenseitige Verschiebung der Stellelemente 71, 72 in beide Richtungen verhindern. Dies wird z.B. erreicht, indem die Ausnehmung 712 U-förmig ausgestaltet wird, so dass sie den eingerasteten Hebelarm 722 beidseitig umfasst und blockiert.

Das zweite Stellelement 72 ist ferner mit Führungselementen 725 versehen, welche beispielsweise entlang einer Führungsschiene vertikal verschiebbar sind.

Fig. 2b zeigt die beiden Stellelemente 71, 72 von unten. Es ist ersichtlich, dass nur zwei der Stössel 711 mit Ausnehmungen 712 versehen sind, in die die Hebelarme 722 einrasten können. Ferner ist ein Schraubendreher gezeigt, der zwischen die Hebelarme 722 geführt wird, um diese mit einer Drehung des Schraubendrehers auseinander zu drücken. In der Folge können die zurückgebogenen Hebelarme 722 an den Stösseln 711 vorbeigeschoben werden. Nach der ersten Inbetriebnahme können die Hebelarme 722 mittels des Schraubendrehers noch einfacher aus den Ausnehmungen 712 gelöst und über die Stössel 711 zurück beispielsweise in die Parklücke 7120 verschoben werden.

Die Stellvorrichtung 1 von Fig. 3a umfasst in dieser vorzugsweisen Ausgestaltung, wie die Stellvorrichtung 1' von Fig.1, ein rotationsymmetrisches Vorrichtungsgehäuse mit einem lösbaren ersten Gehäuseteil 11, das als Abdeckung auf ein zweites Gehäuseteil 12 aufsetzbar ist, welches mittels einer Überwurfmutter 8 mit einem Heizkreisventil verbindbar ist, das einen schematisch gezeigten Ventilkolben 9 aufweist. Das rohrförmige zweite Gehäuseteil 12 besteht aus einem oberen Rohrteil 121 und einem unteren Rohrteil 122, die durch eine Trennwand 123 voneinander getrennt sind, so dass im oberen Rohrteil 121 eine obere Kammer 12A und im unteren Rohrteil 122 eine untere Kammer 12B resultiert. Die Trennwand 123 weist ein nach oben geöffnetes, zylinderförmiges Aufnahmeteil 124 auf, in das ein vorzugsweise mit einem Gewinde versehenes Teil 412 des Aktuatorgehäuses 41 derart eingesetzt ist, dass es innerhalb des Aufnahmeteils 124 axial verschiebbar gelagert ist. Der Aktuator 4 ist derart in das Aufnahmeteil 124 eingesetzt, dass der Aktuatorkolben 42 am Zylinderboden 1241 des Aufnahmeteils 124 anliegt und beim Ausfahren eine axiale Verschiebung des Aktuatorgehäuses 41 bewirkt. Auf das Gewindeteil 412 ist das mit einem Innengewinde 715 versehene erste Stellelement 71 auf geschraubt (siehe Fig. 2a).

Im Zylinderboden 1241 sind Durchtrittsöffnungen 1242 vorgesehen, durch die die vier Stössel 711 des ersten Stellelements 71 hindurch geführt sind. Das erste Stellelement 71 ist mit dem frontseitigen Teil 412 des Aktuatorgehäuses 41 verbunden und wird mit diesem nach oben verschoben, sobald der Aktuator 4 betätigt und der Aktuatorkolben 42 ausgefahren wird. Bei diesem Vorgang wird das erste Stellelement 71 relativ zum zweiten Stellelement 72 verschoben, welches unterhalb der Trennwand 123 bzw. unterhalb des Aufnahmeteils 124 gehalten bleibt.

Obwohl der Aktuator 4 stromlos und der Aktuatorkolben 42 eingefahren ist und die Rückstellfeder 22 die maximale Ausdehnung aufweist, ist der Ventilkolben 9 weder direkt noch indirekt in Kontakt mit dem Stellteil 7, das aus den beiden ineinander gefahrenen Stellelementen 71, 72 besteht. Das Stellteil erfüllt daher noch keine Funktion, sondern ist im Bereitschaftszustand. Das in dieser vorzugsweisen Ausgestaltung dazwischen liegende Zwischenstück 6, welches der Abschirmung des Aufnahmeteils 124 dient, ist lose auf den Ventilkolben 9 abgestützt, der bei der Montage der Stellvorrichtung 1 in dieser Konfiguration nicht nach unten gedrückt wird.

Das Zwischenstück 6 ist hutförmig ausgestaltet und weist eine Hutwand 65 und ein Anzeigeelement 63 mit einem Nocken auf, der in eine Öffnung 120 hineinragt. Nach Inbetriebnahme der Stellvorrichtung 1 zeigt der Nocken 63 an, in welcher Lage sich der Ventilkolben 9 befindet bzw. inwieweit das Heizkreisventil geöffnet oder geschlossen ist.

Fig. 3a zeigt die erfindungsgemässe Stellvorrichtung 1, die sich in einem jungfräulichen Zustand befindet, noch nicht vollständig festgeschraubt. Beim Festschrauben der Stellvorrichtung 1 wird der ausgefahrenen Ventilkolben 9 das vorzugsweise vorgesehene Zwischenstück 6 weiter anheben, jedoch nicht an das Stellteil 7 bzw. an das untere Stellelement 72 anstossen.

Fig. 3b zeigt das zweiteilige Stellteil 7 von Fig. 2a in der Konfiguration von Fig. 3a mit den beiden ineinander verschobenen Stellelementen 71, 72 von der Seite. Die Hebelarme 722 sind gespannt und liegen seitlich an den Stösseln 711 an.

Fig. 3c das zweiteilige Stellteil 7 von Fig. 3b mit den beiden ineinander verschobenen Stellelementen 71, 72 von unten.

Fig. 3d zeigt das zweiteilige Stellteil 7 in der in Fig. 3a gezeigten Konfiguration zusätzlich mit dem Aktuator 4 und dem hutförmigen Zwischenstück 6, welches das untere Ende des Stellteils 7 aufnimmt.

Fig. 3e zeigt die Vorrichtungsteile von Fig. 3d in einer Schnittdarstellung entlang der in Fig. 3d gezeigten Schnittlinie A-A. Es ist gezeigt, dass das zweite Stellelement 72 vom ersten Stellelement 71 entkoppelt und nach oben verschoben ist. Die Hebelarme 722 des zweiten Stellelements 72 liegen an den Stösseln 711 des ersten Stellelements 71 an, sind von diesen jedoch entkoppelt. Der Ventilkolben 9 kann das Zwischenstück 6 bei der ersten Montage der Stellvorrichtung 1 daher widerstandslos nach oben verschieben. Der Aktuatorkolben 42 ist nicht ausgefahren, da die Stellvorrichtung 1 bei der Auslieferung naturgemäss stromlos ist.

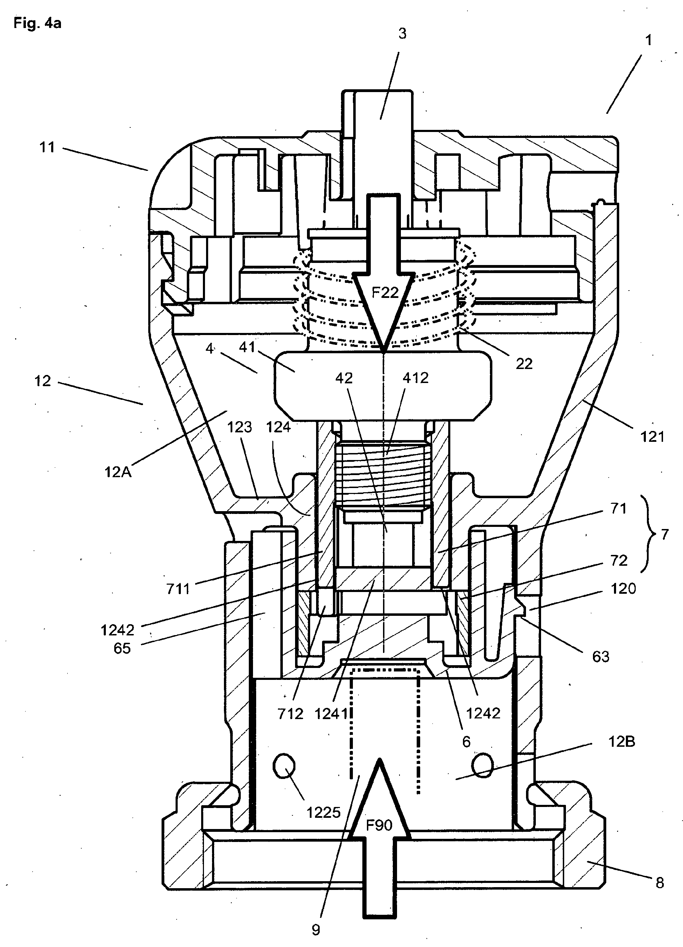

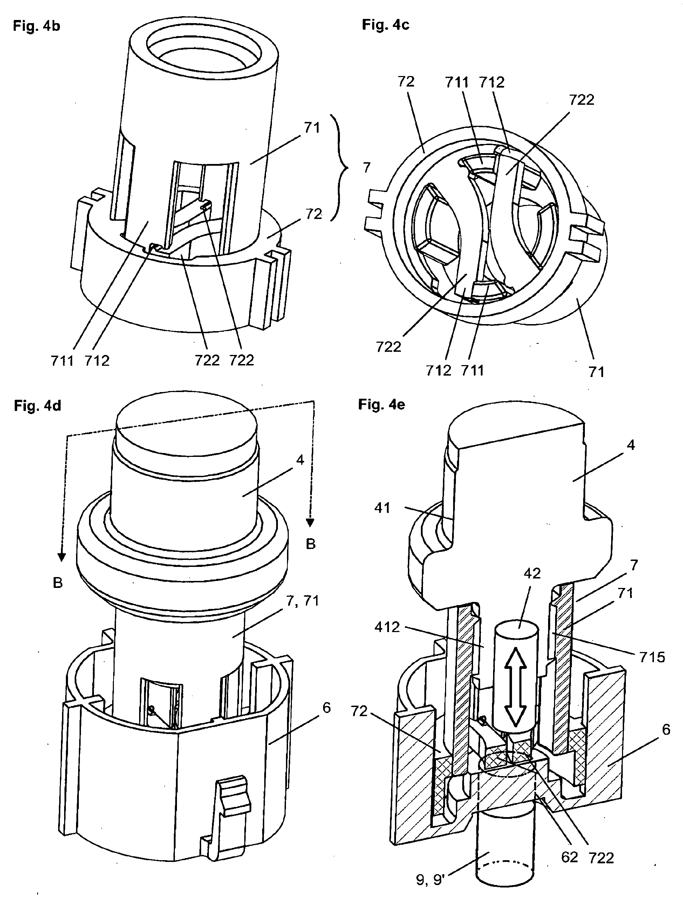

Fig. 4a zeigt einen Schnitt durch die Stellvorrichtung 1 von Fig. 3a in einem Zustand nach der erstmaligen Betriebsaufnahme bzw. nach dem erstmaligen Ausfahren des Aktuatorkolbens 42. Das erste Stellelement 71 wurde vom Aktuator 4 soweit hochgezogen, dass nur noch die Endstücke der beiden Stössel 711 mit den Ausnehmungen 712 bzw. den ersten Kopplungselementen 712 in das zweite Kopplungselement 72 hineinragen, weshalb die Hebelarme 722 bzw. die zweiten Kopplungselemente 722 in diese Ausnehmungen 712 eingetreten sind, wie dies Fig. 4c zeigt. Die beiden Stellelemente 71, 72 sind durch die ersten und zweiten Kopplungselemente 712, 722 somit gekoppelt und gegeneinander verschränkt und bilden somit als optionale Einheit das Stellteil 7. Sobald der Aktuatorkolben 42 wieder eingefahren wird, wird der Aktuator 4 mit dem nun verschränkten Stellteil 7 von der Rückstellfeder 22 wieder nach unten gegen den Ventilkolben 9 gestossen, wodurch dieser gegen die Kraft F90 der Ventilfeder in das Heizkreisventil eingefahren wird (F22 > F90), wodurch dieses verschlossen wird. Die Stellvorrichtung 1 befindet sich nach Inbetriebnahme daher im Zustand »ohne Strom zu«.

Fig. 4b zeigt das zweiteilige Stellteil 7 von Fig. 2a in der in Fig. 4a gezeigten Konfiguration mit den beiden miteinander gekoppelten Stellelementen 71, 72 von der Seite. Es ist ersichtlich, dass die Hebelarme 722 in die Ausnehmungen 712 in den Stösseln 711 eingefahren sind, weshalb die Stössel 711 die Hebelarme 722 nun teilweise überlappen und nach unten stossen können. Ein selbsttätiges Lösen der Hebelarme 722 ist nicht mehr möglich, weshalb die beiden Stellelemente 71, 72 dauerhaft gekoppelt sind.

Fig. 4c zeigt das zweiteilige Stellteil 7 von Fig. 4b von unten.

Fig. 4d zeigt das zweiteilige Stellteil 7 in der Konfiguration von Fig. 4b mit dem Aktuator 4 und dem vorzugsweise vorgesehene hutförmigen Zwischenstück 6, welches das Stellteil 7 unten umfasst.

Fig. 4e zeigt die Vorrichtungsteile von Fig. 4d in einer Schnittdarstellung entlang der in Fig. 4d gezeigten Schnittlinie B--B. Der Aktuatorkolben 42 ist teilweise ausgefahren, weshalb das Aktuatorgehäuse 41 mit dem damit verbundenen Stellteil 7 angehoben wurde. Dazu ist das in das erste Stellelement 71 hineinragende Teil 412 des Aktuatorgehäuses 41 mit einem Gewinde versehen, das in ein Gewinde 715 eingreift, welches innerhalb des ersten Stellelements 71 vorgesehen ist. Die genannten Teile können auch durch Rastelemente, Verriegelungen oder Haftmittel miteinander verbunden werden.

Das vom ersten Stellelement 71 gehaltene zweite Stellelement 72 liegt mit den Hebelarmen 722 an der Oberseite eines Sockelteils 62 des Zwischenstücks 6, an dessen Unterseite der Ventilkolben 9 anliegt. Der Ventilkolben 9 konnte daher dem nach oben fahrenden Stellteil 7 folgen.

Sobald der Aktuator 4 deaktiviert wird und der Aktuatorkolben 42 in der Folge in das Aktuatorgehäuse 41 einfährt, fährt auch das Stellteil 7 wieder nach unten, so dass die Kraft der Rückstellfeder 22 über das Aktuatorgehäuse 41 und das Stellteil 7, insbesondere die Hebelarme 723, und das Zwischenstück 6 auf den Ventilkolben 9 übertragen und dieser nach unten gestossen wird.

Nach der Montage der erfindungsgemässen Stellvorrichtung 1 sind der Aktuator 4 und der Ventilkolben 9 durch das Stellteil 7 und das optionale Zwischenstück 6 normalerweise permanent, d.h. ohne Totzone, miteinander gekoppelt.

Das Zwischenstück 6 ist nur in vorzugsweisen Ausgestaltungen vorgesehen. Sofern dieses nicht eingesetzt ist, liegt der Ventilkolben 9' direkt am Stellteil 7 bzw. am zweiten Stellelement 72 an. Das hutförmige Zwischenstück 6 kann auch in das Stellteil 7 bzw. das zweite Stellelement 72 integriert werden.

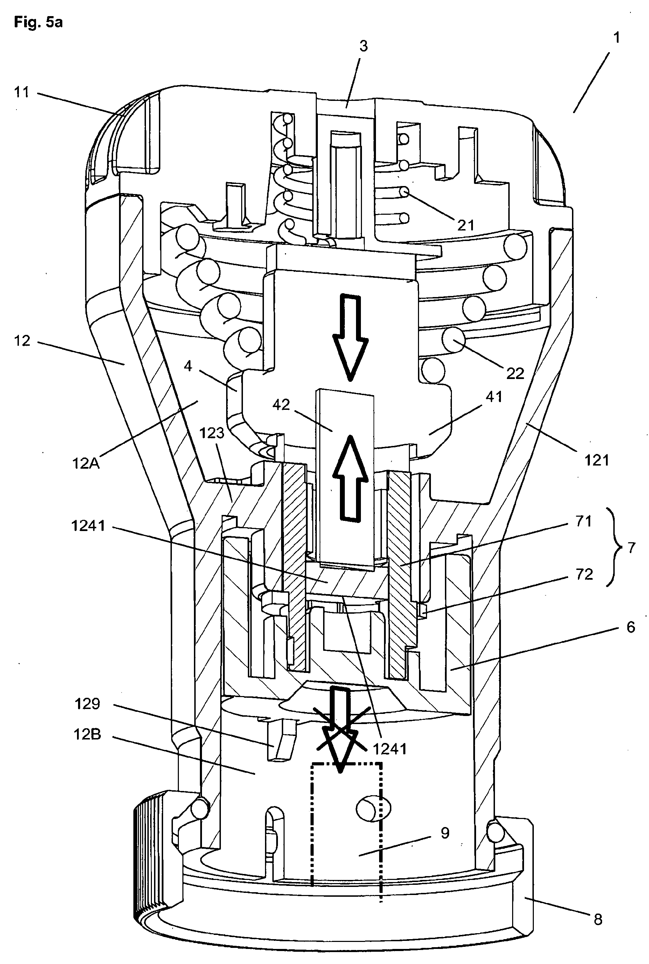

Fig. 5a zeigt einen Längsschnitt durch eine weitere erfindungsgemässe Stellvorrichtung 1, die sich im Wesentlichen durch die Ausgestaltung des zweiteiligen Stellteils 7 von der Stellvorrichtung 1 von Fig. 3a unterscheidet. Die Stellvorrichtung 1 ist in einem Zustand vor der erstmaligen Betriebsaufnahme gezeigt. Der Aktuatorkolben 42 ist in das Aktuatorgehäuse 41 eingefahren. Die Rückstellfeder 22 und die Kontaktfeder 21 drücken das Aktuatorgehäuse 41 daher gegen die im zweiten Gehäuseteil 12 vorgesehene Trennwand 123. Da das zweite Stellelement 72 noch nicht mit dem ersten Stellelement 71 gekoppelt ist, wird das von einer Rippe 129 geführte Zwischenstück 6 dadurch noch nicht in der unteren Endlage gehalten. In diesem Zustand ist das zweite Stellelement 72, das in der Ausgestaltung eines unterbrochenen Ringes vorliegt, noch entlang dem ersten Stellelement 71 verschiebbar. Der Ventilkolben des Heizkreisventils wird bei der Montage der Stellvorrichtung 1 somit nicht nach unten verdrängt.

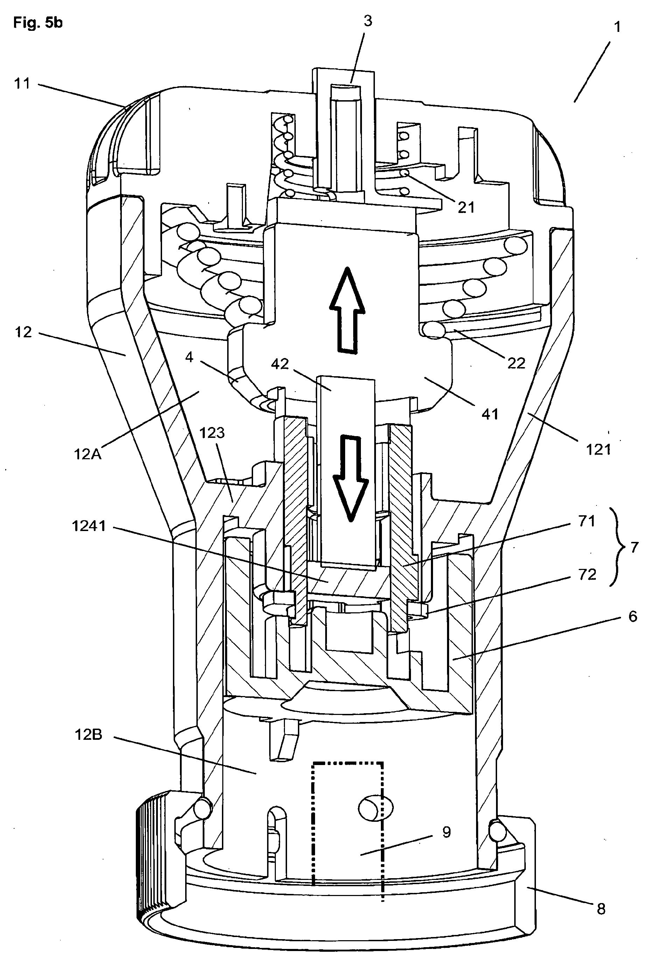

Fig. 5b zeigt die Stellvorrichtung 1 von Fig. 5a bei oder nach der erstmaligen Betriebsaufnahme mit ausgefahrenem Aktuatorkolben 42, angehobenem Aktuatorgehäuse 41 und komprimierten Federelementen 21, 22. Beim Hochfahren des mit dem Aktuatorgehäuse 41 verbundenen ersten Stellelements 71 wurde dieses durch das ringförmige zweite Stellelement 72 hindurch soweit verschoben, bis das zweite Stellelement 72 im ersten Stellelement 71 einrasten konnte. Die beiden miteinander gekoppelten Stellelement 71, 72 bilden somit das Stellteil 7, welches über das Zwischenstück 6 auf den Ventilkolben des Heizkreisventils einwirkt.

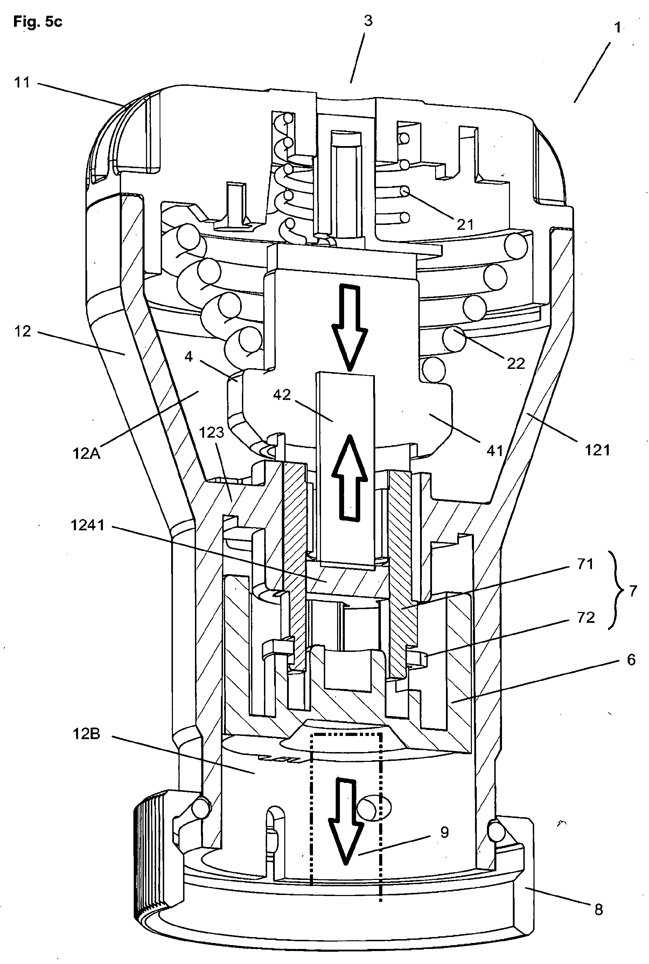

Fig. 5c zeigt die Stellvorrichtung 1 von Fig. 5b mit wieder eingefahrenem Aktuatorkolben 42 und abgesenktem Aktuatorgehäuse 41 sowie das zweiteilige Stellteil 7, das auf das Zwischenstück 6 und den Ventilkolben des Heizkreisventils einwirkt und dieses dadurch verschliesst.

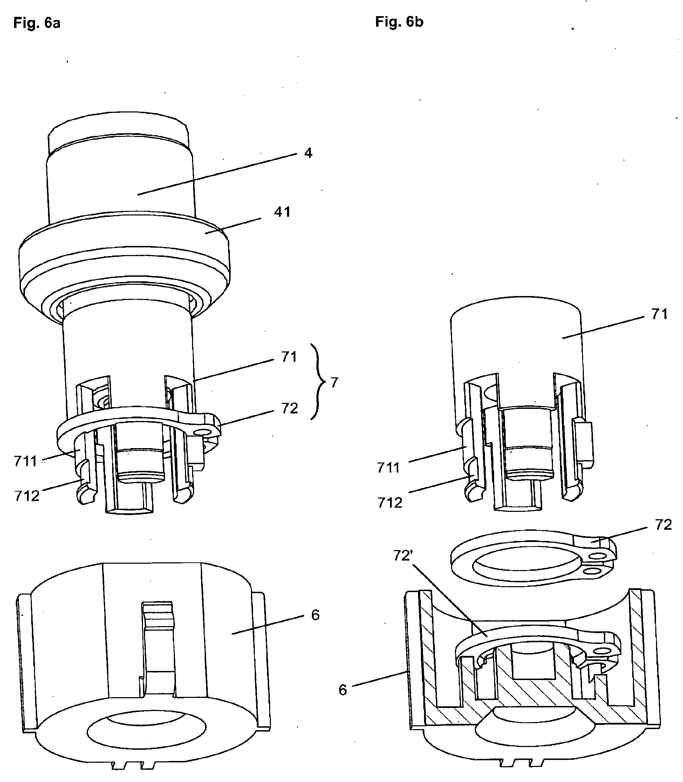

Die Stellvorrichtung 1 von Fig. 5a verwendet ein besonders einfach ausgestaltetes zweites Stellelement 72, nämlich den in den Figuren 6a und 6b gezeigten formstabilen und elastischen Sicherungsring oder Seegering aus Metall oder Kunststoff.

Fig. 6a zeigt das zweiteilige Stellteil 7 der Stellvorrichtung 1 im Zustand von Fig. 5a, in dem das zweite Stellelement 72 entlang dem ersten Stellelement 71 nach oben verschoben wurde. Das zweite Stellelement 72 umfasst das erste Stellelement 71 mit einer Vorspannung derart, dass eine kraftschlüssige aber keine formschlüssige Verbindung vorliegt.

Das erste hülsenförmige Stellelement 71 umfasst vier Stössel 711, die je eine Ausnehmung 712 aufweisen, in die das ringförmige zweite Stellelement 72 einrasten kann, wenn das Aktuatorgehäuse 41 bei der Inbetriebnahme der Stellvorrichtung 1 erstmals nach oben verschoben wird.

Fig. 6b zeigt die beiden voneinander getrennten Stellelemente 71, 72 von Fig. 6a und das hutförmige Zwischenstück 6 in einer Schnittdarstellung. Das zweite Stellelement 72, 72' ist vereinzelt und, wie in dem in Fig. 5c gezeigten Zustand der Stellvorrichtung 1, auf dem Zwischenstück 6 aufliegend gezeigt. In dieser Position können die vier Stössel 711 in eine im Zwischenstück 6 vorgesehene Ringnut eingreifen, weshalb die Kraftübertragung auf das Zwischenstück 6 nur über das zweite Stellelement 72 erfolgt.

Die erfindungsgemässe Stellvorrichtung 1 kann daher mit verschiedenartigen Stellelementen 71, 72 ausgerüstet werden.

## Patentansprüche

1. Stellvorrichtung (1) für Heizkreisventile mit einem ein- oder mehrteiligen Vorrichtungsgehäuse (11, 12), in dem eine Rückstellfeder (22), ein Stellteil (7) und ein mit elektrischen Versorgungsleitungen (51; 52) verbundener Aktuator (4) vorgesehen sind, der ein Aktuatorgehäuse (41) und einen ausfahrbaren Aktuatorkolben (42) aufweist und der einerseits auf die Rückstellfeder (22) und andererseits auf das Stellteil (7) einwirkt, mittels dessen das Heizkreisventil betätigbar ist, **dadurch gekennzeichnet, dass** das Stellteil (7) aus wenigstens ersten Stellelement (71) und einem zweiten Stellelement (72) besteht, die in einem ungekoppelten Zustand relativ zueinander verschiebbar und bei Erreichen eines Koppelpunkts miteinander koppelbar und im gekoppelten Zustand zusammen verschiebbar sind.

2. Stellvorrichtung (1) nach Anspruch 1, **dadurch gekennzeichnet, dass** die beiden Stellelemente (71, 72) vorzugsweise rohrförmig oder ringförmig ausgestaltet und derart dimensioniert sind, dass sie im ungekoppelten Zustand axial ineinander verschiebbar sind und/oder dass das zweite Stellelement (72) ein Sicherungsring oder ein Sprengring aus Kunststoff oder Metall ist.

3. Stellvorrichtung (1) nach Anspruch 2, **dadurch gekennzeichnet, dass** das erste Stellelement (71) wenigstens ein erstes Kopplungselement (712) und dass das zweite Stellelement (72) wenigstens ein zweites Kopplungselement (722) aufweist, wobei die ersten und zweiten Kopplungselemente (712, 722) nach einer gegenseitigen Verschiebung der beiden Stellelemente (71, 72) ineinander eingreifen können.

4. Stellvorrichtung (1) nach Anspruch 3, **dadurch gekennzeichnet, dass** die beiden Kopplungselemente (712, 722) im gekoppelten Zustand der Stellelemente (71, 72) eine Blockadeverbindung oder eine Rastverbindung bilden und/oder dass die beiden Kopplungselemente (712, 722) im gekoppelten Zustand der Stellelemente (71, 72) formschlüssig ineinander eingreifen oder aneinander anliegen.

5. Stellvorrichtung (1) nach Anspruch 2, 3 oder 4, **dadurch gekennzeichnet, dass** das erste Stellelement (71) wenigstens einen Stössel (711) aufweist, der in das zweite Stellelement (72) eingeführt ist und/oder dass das erste Stellelement (71) formschlüssig oder kraftschlüssig mit dem Aktuator (4) verbunden ist.

6. Stellvorrichtung (1) nach Anspruch 5, **dadurch gekennzeichnet, dass** der Stössel (711) wenigstens eine Ausnehmung aufweist, die das erste Kopplungselement (712) bildet, und dass das zweite Stellelement (72) wenigstens ein elastisches Hebelelement aufweist, welches das zweite Kopplungselement (722) bildet und welches im ungekoppelten Zustand der Stellelemente (71, 72) am Stössel (711) anliegt oder in eine im Stössel (711) vorgesehene Parklücke (7120) eingreift und im gekoppelten Zustand der Stellelemente (71, 72) in das zweite Kopplungselement (712) eingreift.

7. Stellvorrichtung (1) nach Anspruch 5 oder 6, **dadurch gekennzeichnet, dass** ein rohrförmiges zweites Gehäuseteil (12) vorgesehen ist, das ein durch ein abgedecktes Oberteil (121) und ein mit einem Heizkreisventil verbindbares Unterteil (122) sowie eine Trennwand (123) zwischen dem Oberteil (121) und dem Unterteil (122) umfasst, die wenigstens eine Durchtrittsöffnung (1242) aufweist, durch die das Stellteil (7), vorzugsweise der wenigstens eine Stössel (711) des ersten Stellelements (71), hindurch geführt ist, während das zweite Stellelement (72) unterhalb der Trennwand (123) gehalten ist.

8. Stellvorrichtung (1) nach Anspruch 7, **dadurch gekennzeichnet, dass** die Trennwand (123) mit einem vorzugsweise zylinderförmigen Aufnahmeteil (124) versehen ist, welches der verschiebbaren Lagerung des Aktuators (4) dient und das einen Zylinderboden (1241) aufweist, in dem die wenigstens eine Durchtrittsöffnung (1242) vorgesehen ist.

9. Stellvorrichtung (1) nach einem der Ansprüche 1-8, **dadurch gekennzeichnet, dass** der Aktuatorkolben (42) auf ein Gehäuseteil, vorzugsweise die Trennwand (123) oder den Zylinderboden (1241) abgestützt ist, so dass bei der Betätigung des Aktuators (4) das Aktuatorgehäuse (41) gegen die Rückstellfeder (22) verschiebbar ist.

10. Stellvorrichtung (1) nach Anspruch 9, **dadurch gekennzeichnet, dass** der Aktuator (4), das Aktuatorgehäuse (41) oder der Aktuatorkolben (42), über das Stellteil (7) mit den beiden ungekoppelten oder ungekoppelten Stellelementen (71, 72) mit dem Heizkreisventil bzw. dem Kolben des Heizkreisventils verbindbar ist.

11. Stellvorrichtung (1) nach einem der Ansprüche 1-10, **dadurch gekennzeichnet, dass** am zweiten Stellelement (72) ein Zwischenstück (6) anliegt, welches vorzugsweise hutförmig ausgestaltet ist und das zylinderförmige Aufnahmeteil (124) abschirmt, oder dass das zweite Stellelement (72) einstückig mit einem Hutelement (65) verbunden ist, welches das zylinderförmige Aufnahmeteil (124) abschirmt.

12. Stellvorrichtung (1) nach einem der Ansprüche 1-11, **dadurch gekennzeichnet, dass** die beiden Stellelemente (71, 72) bei der Auslieferung der Stellvorrichtung (1) voneinander entkoppelt und/oder gegenseitig verschiebbar sind.

13. Heizkreisventil mit einer Stellvorrichtung (1) nach einem der Ansprüche 1 - 12.

## Claims

1. Control device (1) for heating circuit valves with a one-part or multi-part device housing (11, 12), in which a return spring (22), a control member (7) and an actuator (4) are provided that is connected to a first and a second electrical supply line (51; 52) and that comprises an actuator housing (41) and a movable actuator plunger (42) and that acts both on the return spring (22) and the control member (7), with which the heating circuit valve can be operated, **characterised in that** the control member (7) consists of at least one first control element (71) and one second control element (72), which are in a non-connected state movable relative to each other and connectable to each other upon arrival at a coupling point and movable together in the connected state.

2. Control device (1) according to claim 1, **characterised in that** the two control elements (71, 72) are preferably tube- or ring-shaped and dimensioned in a way, that they are axially movable into each other in the non-connected state and/or that the second control element (72) is a retaining ring or a circlip made of plastic or metal.

3. Control device (1) according to claim 2, **characterised in that** the first control element (71) comprises at least one first coupling element (712) and the second control element (72) comprises at least one second coupling element (722), wherein the first and second coupling element (712, 722) can interlock with each other after a mutual displacement of the control members (71, 72).

4. Control device (1) according to claim 3, **characterised in that** the two coupling elements (712, 722) form in the coupled state of the control members (71, 72) a blocking connection or a click connection and/or that the two coupling elements (712, 722) are in the coupled state of the control members (71, 72) interdigitated or lying against each other in a form-locking manner.

5. Control device (1) according to claim 2, 3 or 4, **characterised in that** the first control element (71) comprises at least one tappet rod (711), which is inserted into the second control element (72) and/or that the first control element (71) is connected to the actuator (4) in a form-locking or force-locking manner.

6. Control device (1) according to claim 5, **characterised in that** the tappet rod (711) comprises at least one recess, that forms the first coupling element (712), and that the second control element (72) comprises at least one elastic lever element, which forms the second coupling element (722) and which in the non-connected state of the control elements (71, 72) is lying against the tappet rod (711) or engaging into a parking space (7120) provided on the tappet rod (711) and in the coupled state of the control elements (71, 72) engaging into the second coupling element (712).

7. Control device (1) according to claim 5 or 6, **characterised in that** a tube-shape second device housing part (12) is provided, which comprises a covered upper element (121) and a lower element (122) connectable to the heating circuit valve as well as a separation wall (123) between the upper element (121) and the lower element (122), said separation wall (123) comprising at least one opening (1242), through which the control member (7), preferably the at least one tappet rod (711) of the first control element (71), is guided, while the second control element (72) is held underneath the separation wall (123).

8. Control device (1) according to claim 7, **characterised in that** the separation wall (123) comprises a preferably cylindar-shaped receiving member (124), which serves for movably holding the actuator (4) and which comprises a cylindrical base (1241), in which the at least one opening (1242) is foreseen.

9. Control device (1) according to one of the claims 1-8, **characterised in that** the actuator piston (42) is supported by a housing part, preferably the separation wall (123) or the cylindrical base (1241), such that upon actuation of the actuator (4) the actuator housing (41) is movable against the return spring (22).

10. Control device (1) according to claim 9, **characterised in that** the actuator (4), the actuator housing (41) or the actuator piston (42), are connectable through the control member (7) with the two coupled or non-coupled control elements (71, 72), with the heating circuit valve resp. the piston of the heating circuit valve.

11. Control device (1) according to one of the claims 1-10, **characterised in that** an adaptation piece (6) is lying against the second control element (72), said adaptation piece (6) being preferably hat-shaped and screening the cylinder-shaped receiving member (124), or that the second control element (72) is connected in one piece to a hat element (65), which is screening the cylinder-shaped receiving member (124).

12. Control device (1) according to one of the claims 1-11, **characterised in that** the two control members (71, 72) are decoupled and/or mutually displaceable at the delivery of the control device (1).

13. Heating circuit valve with a control device (1) according to one of the claims 1 to 12.

## Revendications

1. Dispositif de réglage (1) pour vannes de circuit de chauffage avec un boîtier de dispositif (11, 12) réalisé en une ou plusieurs parties, dans lequel il est prévu un ressort de rappel (22), un élément de réglage (7) et un actionneur (4) relié aux lignes d'alimentation électrique (51; 52), lequel présente un boîtier d'actionneur (41) et un piston d'actionneur mobile (42), et qui agit également sur le ressort de rappel (22) et sur l'élément de réglage (7), au moyen duquel la vanne de circuit de chauffage peut être ajusté, **caractérisé en ce que** l'élément de réglage (7) consiste en au moins une première pièce de réglage (71) et une deuxième pièce de réglage (72), qui peuvent dans un état non-couplé être déplace l'une relative contre l'autre et qui peuvent lors de l'arrivée à un point de couplage être couplé ensemble et déplacé ensemble dans l'état couplé.

2. Dispositif de réglage (1) selon la revendication 1, **caractérisé en ce que** les deux pièces de réglage (71, 72) sont conçu de préférence en forme de tuyaux ou d'anneau et dimensionné de manière à ce qu'ils sont dans l'état non-couplé déplaçables axialement l'une dans l'autre et/ou que la deuxième pièce de réglage (72) est un anneau de sécurité ou un circlip en plastique ou en métal.

3. Dispositif de réglage (1) selon la revendication 2, **caractérisé en ce que** la première pièce de réglage (71) présente au moins un premier élément de couplage (712) et que la deuxième pièce de réglage (72) présente au moins un deuxième élément de couplage (722), le premier et deuxième élément de couplage (712, 722) pouvant intervenir l'un avec l'autre après le déplacement des deux pièces de réglage (71, 72).

4. Dispositif de réglage (1) selon la revendication 3, **caractérisé en ce que** les deux éléments de couplage (712, 722) forment dans l'état couplé des pièces de réglage (71, 72) et/ou que les deux éléments de couplage (712, 722) interviennent l'un dans l'autre ou s'appuient l'un contre l'autre à ajustement de forme dans l'état couplé des pièces de réglage (71, 72).

5. Dispositif de réglage (1) selon la revendication 2, 3 ou 4, **caractérisé en ce que** la première pièce de réglage (71) présente au moins un pilon (711), qui pénètre dans la deuxième pièce de réglage (72) et/ou que la première pièce de réglage (71) est connecté à l'actionneur (4) par ajustement de forme ou par adhérence.

6. Dispositif de réglage (1) selon la revendication 5, **caractérisé en ce que** le pilon (711) présente au moins une cavité, qui forme le premier élément de couplage (712), et que la deuxième pièce de réglage (72) présente au moins un levier élastique, qui forme le deuxième élément de couplage (722) et qui s'appuie dans l'état non-couplé des pièces de réglage (71, 72) sur le pilon ou intervient dans une exclusion (7120) prévue à ceci dans le pilon (711) et qui dans l'état couplé des pièces de réglage (71, 72) intervient dans le premier élément de couplage (712).

7. Dispositif de réglage (1) selon la revendication 5 ou 6, **caractérisé en ce qu**'une deuxième pièce du boîtier (12) en forme de tuyaux est prévue, qui présente une partie supérieure couverte (121) et une partie inférieure (122) qui peut être relié à une vanne de circuit de chauffage et une paroi de séparation (123) entre la partie supérieure (121) et la partie inférieure (122), ladite paroi de séparation (123) présentant au moins un trou (1242), à travers lequel l'élément de réglage (7), de préférence le au moins un pilon (711) de la première pièce de réglage (71), est guidé, pendant que la deuxième pièce de réglage (72) est tenu au-dessous de la paroi de séparation (123).

8. Dispositif de réglage (1) selon la revendication 7, **caractérisé en ce que** la paroi de séparation (123) présente une pièce de réception (124) de préférence en forme cylindrique, qui sert au logement à pouvoir coulisser de l'actionneur (4) et qui présente un fond cylindrique (1241), dans lequel le au moins un trou (1241) est prévu.

9. Dispositif de réglage (1) selon une des revendications 1-8, **caractérisé en ce que** le piston de l'actionneur (42) s'appuie sur une partie du boîtier, de préférence la paroi de séparation (123) ou le fond cylindrique (1241), tel que le boîtier de l'actionneur (41) est déplaçable par rapport au ressort de rappel (22) lors de l'actionnement de l'actionneur (4).

10. Dispositif de réglage (1) selon la revendication 9, **caractérisé en ce que** l'actionneur (4), le boîtier de l'actionneur (41) ou le piston de l'actionneur (42), peuvent être couplé par l'élément de réglage (7) avec les deux pièces de réglage (71, 72) couplées ou non-couplées avec la vanne de circuit de chauffage resp. le piston de la vanne de circuit de chauffage.

11. Dispositif de réglage (1) selon une des revendications 1-10, **caractérisé en ce qu**'une pièce de séparation (6) s'appuie sur la deuxième pièce de réglage (72), ladite pièce de séparation (6) étant de préférence conçu en forme de chapeau et qui écrante la pièce de réception cylindrique (124), ou que la deuxième pièce de réglage (72) est connecté de manière monobloc à un élément de chapeau (65), qui écrante la pièce de réception cylindrique (124).

12. Dispositif de réglage (1) selon une des revendications 1-11, **caractérisé en ce que** les deux pièces de réglage (71, 72) sont découplés et/ou mutuellement déplaçables lors de la livraison du dispositif de réglage (1).

13. Vanne de circuit de chauffage avec un dispositif de réglage (1) selon une des revendications 1 à 12.
